# FASCICULE DE BREVET EUROPEEN

(11) **EP 1 407 108 B1**
(45) Date de publication et mention de la délivrance du brevet: **28.06.2006**
(21) Numéro de dépôt: 02741064.6
(22) Date de dépôt: 03.07.2002
(51) Int. Cl.: E06B 9/32, E06B 9/68

(54) **PROCEDE DE MESURE DE LA LUMIERE EXTERIEURE POUR LA COMMANDE D'UN MOYEN DE PROTECTION SOLAIRE OU D'ECLAIRAGE**
AUSSENLICHT-MESSVERFAHREN FÜR DIE STEUERUNG EINER SONNENSCHUTZ- ODER BELEUCHTUNGSANLAGE
METHOD FOR MEASURING EXTERNAL LIGHT TO CONTROL PROTECTION MEANS AGAINST SUNLIGHT OR ILLUMINATION

(30) Priorité: 18.07.2001 FR 0109616
(43) Date de publication de la demande: 14.04.2004
(73) Titulaire: Somfy SAS, 74300 Cluses (FR)
(72) Inventeur: MOTTE, Emeric, F-74700 Sallanches (FR)
(74) Mandataire: Bugnion Genève
(86) Numéro de dépôt international: PCT/IB2002/002619
(87) Numéro de publication internationale: WO 2003/008753

(56) Documents cités:
- DE-A- 19 715 517

## Description

L'invention concerne un procédé de mesure de la lumière extérieure pour la commande d'un moyen de protection solaire motorisé équipant au moins une baie d'un bâtiment et/ou l'éclairage.

Il est connu d'utiliser le signal transmis par un capteur extérieur d'ensoleillement pour actionner des moyens de protection solaire situés sur une baie ou un ensemble de baies.

De telles installations solaires sont décrites, par exemple, dans les brevets FR 2 510 777, FR 2 740 825 et DE 43 15 406. Dans ces installations les éléments de protection solaire motorisés sont commandés en fonction de mesures effectuées par une ou plusieurs cellules solaires, c'est-à-dire des cellules photovoltaïques, en général une cellule par façade. Ces cellules solaires mesurent l'intensité lumineuse du rayonnement solaire direct. Au-dessus d'un certain seuil, et après une certaine temporisation (décrite en particulier dans le document DE 43 15 406), les protections solaires sont mises dans une certaine position. Au-dessous de ce seuil, et après une certaine temporisation, elles sont remontées.

De nombreux perfectionnements ont été apportés à ces installations, tels que temporisations variables, seuils d'apparition et de disparition différents, poursuite de la course du soleil en fonction de la longitude, latitude, date, heure, orientation de la façade, des caractéristiques mécaniques et dimensionnelles de la baie à protéger. Tous les automatismes de l'art antérieur ont cependant un point commun, ils fonctionnent tous dans des périodes ensoleillées et sont commandés par le rayonnement solaire direct.

Le brevet US 4,538,218 décrit un capteur permettant de s'affranchir de l'influence du soleil direct sur la mesure d'éclairement extérieur. Le but visé est de connaître le niveau de lumière au moins disponible par diffusion de la voûte céleste, ce niveau conditionnant l'apport complémentaire de lumière à apporter par des luminaires et par conséquent la puissance à délivrer à ces luminaires. A cet effet, il est préconisé d'utiliser une pluralité de capteurs extérieurs disposés selon des angles décalés et couvrant l'ensemble de la portion de la voûte céleste vue depuis la façade. La valeur la plus faible des signaux captés est nécessairement représentative de l'éclairement naturel minimum disponible. Inversement, la valeur la plus forte correspond à l'effet du soleil direct. Cette valeur est éliminée et on moyenne éventuellement les autres signaux pour évaluer l'éclairement diffus moyen disponible.

Dans le brevet US 5,237,169 au nom du demandeur, il est proposé de commander simultanément des protections solaires et un éclairage artificiel en vue d'optimiser ces deux composantes du confort visuel.

Dans le brevet US 4,355,896, il est prévu d'utiliser plusieurs capteurs de lumière dont l'un reçoit la lumière directe du soleil et les autres sont dirigés vers des parties du ciel ne contenant pas de soleil, en vue de déterminer le degré de nébulosité. Ce dispositif est destiné aux prédictions météorologiques, à l'évaluation de facteurs climatiques et à l'évaluation de convertisseurs d'énergie solaire et pour d'autres applications non précisées.

Le brevet US 4,008,391 décrit un dispositif pour la mesure de la qualité de l'éclairage d'une surface de travail. Ce dispositif utilise deux capteurs linéaires. Par somation et division arithmétique des signaux délivrés par ces capteurs on détermine une résultante que l'on peut lire sur des moyens d'affichage.

Il est également bien connu d'effectuer une mesure précise du rayonnement diffus au moyen d'un dispositif connu sous le nom de pyranomètre. Rappelons que ce dispositif contient simplement un capteur photovoltaïque unique horizontal et un arc de cercle opaque centré sur ce capteur et incliné selon la latitude du lieu. Un tel dispositif serait relativement compliqué à utiliser pour la commande d'une protection solaire.

D'une manière générale, on ne trouve dans l'art antérieur aucun document dans lequel on se préoccupe d'introduire une discrimination entre des situations de lumière diffuse, c'est-à-dire en l'absence de soleil direct, fondamentalement différentes : celle d'un ciel sans nuage ou, au contraire, celle d'un ciel fortement nuageux ou saturé d'humidité. Cette dernière situation, souvent qualifiée de «ciel blanc» se rencontre fréquemment dans les zones équatoriales, mais également dans les pays du Nord de l'Europe. Le soleil éclaire la zone nuageuse qui diffuse fortement et présente de ce fait une luminance importante, telle qu'on a besoin de protections solaires. A cette situation s'apparente également celle d'une grande façade claire d'un bâtiment opposée à la baie considérée et elle-même soumise à l'éclairement direct du soleil. Une petite façade voisine, fortement réfléchissante, d'angle solide faible vue de la baie considérée, pourra au contraire être apparentée au soleil direct.

La présente invention a pour but de combler la lacune relevée ci-dessus.

Le procédé de mesure de lumière extérieure selon l'invention est caractérisé en ce qu'on détecte et discrimine au moins trois états, respectivement ciel bleu, ciel blanc et soleil direct. On appelle ici ciel bleu un ciel sensiblement homogène et présentant une faible luminance (ciel de beau temps, ciel gris, ciel nocturne) et ciel blanc un ciel sensiblement homogène et présentant une forte luminance.

Chaque état peut être décomposé en plusieurs sous-états.

La discrimination entre les trois états est obtenue par exemple à partir d'une détection intermédiaire distinguant, soit un état homogène CH, soit un état inhomogène CNH du ciel.

Selon un mode d'exécution, on compare l'écart entre les mesures E1, E2 de deux capteurs ou d'une pluralité de capteurs d'ensoleillement ne pouvant recevoir simultanément la lumière solaire directe, à une première valeur de seuil S1, l'état du ciel étant homogène CH si la valeur absolue de cet écart reste inférieure au seuil S1, et inhomogène CNH dans le cas contraire. Dans un état de ciel homogène CH, on compare la mesure E1, E2, d'un capteur d'ensoleillement au moins, ou la moyenne de plusieurs capteurs d'ensoleillement, à une deuxième valeur de seuil S2, l'état du ciel étant blanc si la mesure est supérieure au seuil S2 et bleu dans le cas contraire.

L'état de soleil direct correspond à un état inhomogène du ciel.

Selon une autre mode d'exécution, dans un état de ciel inhomogène CNH, on compare la mesure E1, E2 d'un capteur d'ensoleillement au moins, ou la moyenne de plusieurs capteurs d'ensoleillement, à une troisième valeur de seuil S3, l'état du ciel étant soleil direct gênant si la mesure est supérieure au seuil S3 et soleil direct non gênant dans le cas contraire.

Selon un autre mode d'exécution, la pluralité de capteurs est remplacée par une caméra monochrome à capteurs matriciels, pourvue d'un objectif grand angle et dont on exploite le signal vidéo, sur au moins une période de balayage pour définir l'état homogène ou inhomogène du ciel en comparant les écarts mesurés à un premier seuil S1, puis, dans le cas d'un ciel homogène pour, définir un état de ciel bleu si la mesure moyenne est inférieure à un deuxième seuil S2 et de ciel blanc dans le cas contraire et enfin définir un état de soleil direct gênant par comparaison des mesures à un troisième seuil S3.

Selon un autre mode d'exécution, la pluralité de capteurs est remplacée par une caméra couleur à capteurs matriciels R, V, B, pourvue d'un objectif grand angle, et dont on exploite le signal vidéo d'une couleur par exemple V, sur au moins une période de balayage pour définir l'état homogène ou inhomogène du ciel en comparant les écarts mesurés à un premier seuil S1, puis, dans le cas d'un ciel homogène, en utilisant le rapport des couleurs R/B ou leur écart pour définir la couleur du ciel.

Selon un autre mode d'exécution utilisant un processeur utilisant des algorithmes de logique floue, chacun des états détectés et discriminés est, dans ce cas un état caractérisé par sa fonction d'appartenance à un sous-ensemble flou.

On définit de préférence deux sous-ensembles flous intermédiaires, respectivement ciel homogène et ciel inhomogène, et les fonctions d'appartenance correspondante, CH et CNH.

Selon un mode d'exécution, la grandeur variable des fonctions d'appartenance ciel homogène CH et ciel inhomogène CNH est l'écart absolu entre les mesures E1, E2 de deux capteurs, ou l'écart maximum d'une pluralité de capteurs d'ensoleillement ne pouvant recevoir simultanément la lumière solaire directe.

Selon un autre mode d'exécution, la grandeur variable des fonctions d'appartenance ciel bleu et ciel blanc, est la mesure E1, E2 d'un capteur d'ensoleillement au moins, ou la moyenne de plusieurs capteurs d'ensoleillement.

Les capteurs utilisés sont, par exemple, constitués par la matrice d'éléments photosensibles d'une caméra CCD monochrome ou couleur, munie d'un objectif grand angle.

L'invention a également pour objet un dispositif de protection solaire et/ou d'éclairage comprenant au moins un élément piloté par le procédé de mesure selon l'un des modes d'exécution.

Le dessin annexé représente, à titre d'exemple, quelques modes de mise en oeuvre du procédé selon l'invention.

La figure 1 représente schématiquement un premier mode d'exécution.

La figure 2 représente schématiquement une variante du premier mode d'exécution.

La figure 3 représente schématiquement un deuxième mode d'exécution.

Les figures 4 et 5 sont des diagrammes illustrant, de manière conventionnelle, l'application de la méthode de la logique floue au traitement de trois états.

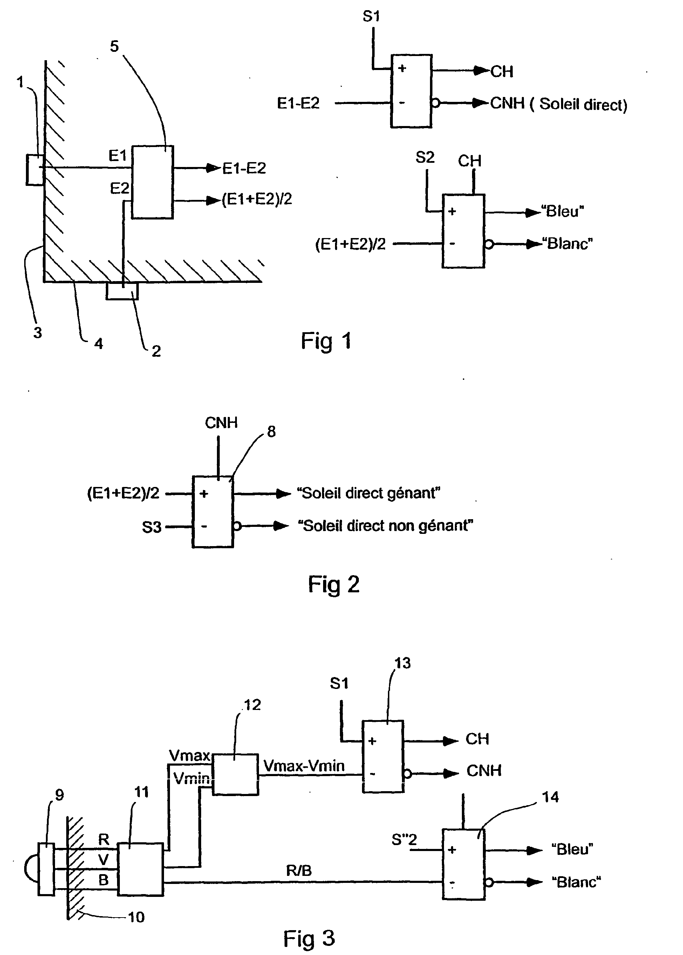

Dans le mode d'exécution selon la figure 1, on utilise deux capteurs photovoltaïques 1 et 2 disposés respectivement sur deux façades 3 et 4 non parallèles d'un bâtiment. Ces capteurs pourraient être également proches l'un de l'autre mais disposés de façon à former un angle suffisant, typiquement égal à la moitié de l'ouverture angulaire de l'espace à balayer. Les capteurs actuellement commercialisés étant volontairement peu directifs, deux capteurs suffisent à couvrir la voûte céleste. Les signaux fournis par les capteurs 1 et 2 sont appliqués à une unité de calcul simple 5 qui délivre sur ses sorties d'une part la valeur absolue |E1 - E2| et d'autre part la moyenne (E1 + E2)/2. Au moyen d'un premier comparateur 6 la valeur absolue |E1 - E2| est comparée à une première valeur de seuil S1, tandis que la moyenne (E1 + E2)/2 est comparée, au moyen d'un second comparateur 7, à une seconde valeur de seuil S2. S1 est utilisé comme seuil de détection de l'homogénéité des luminances de la voûte céleste alors que le seuil S2 est une valeur correspondant à un éblouissement. S1 est beaucoup plus petit que S2. On rappellera que le comparateur 7 est du type présentant deux entrées analogiques A et B, une entrée de validation V (CH) et deux sorties dont l'une est active si A > B et l'autre est active si A < B, les sorties n'étant actives que si l'entrée de validation est activée.

Si |E1 - E2| < S1, le ciel est dit homogène (sortie CH): aucun des capteurs ne reçoit un soleil direct. Si par contre |E1 - E2| > S1, cela signifie que l'un des capteurs reçoit le soleil directement (ciel non homogène, sortie CNH).

La comparaison de la moyenne (E1 + E2)/2 à S2 permet de savoir, lorsque le ciel est homogène (CH), si le ciel est éblouissant («Blanc») ou non («Bleu»). Au lieu de comparer la moyenne, on pourrait simplement comparer E1 ou E2 à S2.

Il serait bien entendu possible de comparer la somme E1 + E2 à un seuil S'2 deux fois plus élevé que S2.

Si les capteurs sont utilisés pour commander des installations simples, pour lesquelles la fermeture des protections solaires s'effectue en tout ou rien, on utilisera préférentiellement un troisième seuil S3, généralement supérieur au seuil S2. L'état «soleil direct» est alors décomposé en deux sous-états «soleil direct gênant» et «soleil direct non gênant». Ce mode d'exécution est représenté schématiquement à la figure 2. On compare ici la moyenne (E1 + E2)/2 à S3 au moyen d'un comparateur 8 sur les sorties duquel on obtient les deux sous-états «soleil direct gênant» et «soleil direct non gênant».

Comme capteur, on peut utiliser par exemple le capteur décrit dans le brevet US 4,538,218. Le discriminateur doit alors être modifié pour comparer le niveau «direct sunlight» à S3 et pour comparer le niveau «skylight» à S2.

Bien entendu, les deux capteurs précédents peuvent être remplacés par un nombre plus important de capteurs, ce qui permet d'avoir un champ plus large et/ou une meilleure information sur le caractère hétérogène du ciel.

Dans ce cas, une façon simple d'utiliser la méthode précédente consiste à considérer l'écart maximum (en valeur absolue) pour le test d'homogénéité (comparaison au seuil S1) et la valeur moyenne des mesures pour la discrimination ciel bleu/ciel blanc (comparaison au seuil S2) ou encore pour une discrimination soleil direct gênant/soleil direct non gênant (comparaison au seuil S3).

Selon un autre mode d'exécution, cette pluralité de capteurs est constituée par la matrice d'éléments photosensibles d'une caméra CCD (à balayage), munie d'un objectif grand angle. Dans le cas d'une caméra monochrome, l'exploitation du signal vidéo sur une période donne la répartition de la lumière reçue sur les différents pixels. Il est connu de l'homme du métier d'obtenir, à partir de ce signal, la valeur moyenne et l'écart maximum, afin d'appliquer le traitement décrit précédemment. Bien que l'invention ne requiert pas une analyse fine du ciel, une telle solution est intéressante car de telles caméras sont aujourd'hui accessibles à très bas prix et interfaçables simplement avec un système numérique. Ces caméras sont connues sous le nom de «Webcams».

La figure 3 représente schématiquement l'utilisation d'une caméra couleur. La caméra 9 est placée à l'extérieur du bâtiment 10. Elle délivre trois signaux vidéo R (rouge), V (vert), B (bleu). Lors de chaque cycle de balayage complet de la matrice des capteurs, chaque signal vidéo varie comme la lumière captée par tous les pixels successivement balayés. Les signaux vidéo R, V, B sont traités par une unité 11. L'un des signaux vidéo, par exemple V est traité de manière numérique ou à l'aide de moyens analogiques simples (diodes, résistances et condensateurs) de manière à donner naissance à deux valeurs VMAX et VMIN. Sur une troisième sortie, l'unité 11 fournit le rapport des deux autres signaux vidéo, en l'occurrence R/B.

Le circuit 12 calcule la valeur absolue de la différence VMAX - VMIN, c'est-à-dire |VMAX - VMIN|, et cette valeur est comparée au seuil S1 au moyen d'un comparateur 13. Comme dans le premier mode d'exécution, si |VMAX - VMIN| < S1, la voûte céleste est considérée comme homogène (ciel bleu ou ciel blanc, sortie CH). Si elle est supérieure à S1 cela signifie soleil direct (ciel non homogène, sortie CNH).

Dans le cas d'un ciel homogène (CH), il reste à distinguer entre ciel bleu et ciel blanc. On utilise à cet effet la décomposition spectrale que nous donne la caméra. Plus précisément, on compare le rapport R/B à une valeur de seuil S"2 au moyen d'un comparateur 14.

La valeur de S"2 est beaucoup plus petite que 1. Si R/B < S''2, cela signifie que le signal B est beaucoup plus grand que le signal R, c'est-à-dire que le ciel est «bleu». Si R/B > S"2, cela signifie que le ciel est «blanc».

On peut bien entendu choisir l'un des deux autres signaux vidéo R et B pour sortir les valeurs MAX et MIN et calculer le rapport des deux autres signaux.

Au lieu de la valeur MIN on pourrait utiliser la valeur moyenne.

L'homme de l'art pourra utiliser une autre combinaison que le rapport pour comparer l'importance relative des différentes composantes spectrales de la lumière.

En lieu et place d'une caméra couleur, il est possible d'utiliser des photodiodes munies de filtres comme décrit dans le brevet US 5,426,294 pour analyser la composition spectrale de la lumière captée.

Selon une autre mode d'exécution, on utilise des algorithmes de logique floue. Il est connu des automaticiens d'utiliser des algorithmes de logique floue pour adapter la réponse à une situation combinant plusieurs aspects. Chaque cas tranché appelle une réponse particulière dite «règle», mais il est admis qu'une situation nécessite la combinaison pondérée de plusieurs règles. Ainsi, dans le cas de l'invention, un ciel voilé par une atmosphère humide homogène peut donner naissance à une combinaison d'aspects tels que ciel blanc et soleil direct (atténué).

La discrimination à trois états selon l'invention s'applique en considérant que chacun des trois états détectés et discriminés est caractérisé par sa fonction d'appartenance à un sous-ensemble flou (soleil direct ou ciel bleu ou ciel blanc). Contrairement aux cas précédents les états ne sont plus exclusifs.

De manière simple et selon les mêmes principes que dans les modes d'exécution précédents, on a intérêt à décomposer la discrimination en deux temps par la désignation d'une fonction d'appartenance intermédiaire : ciel homogène.

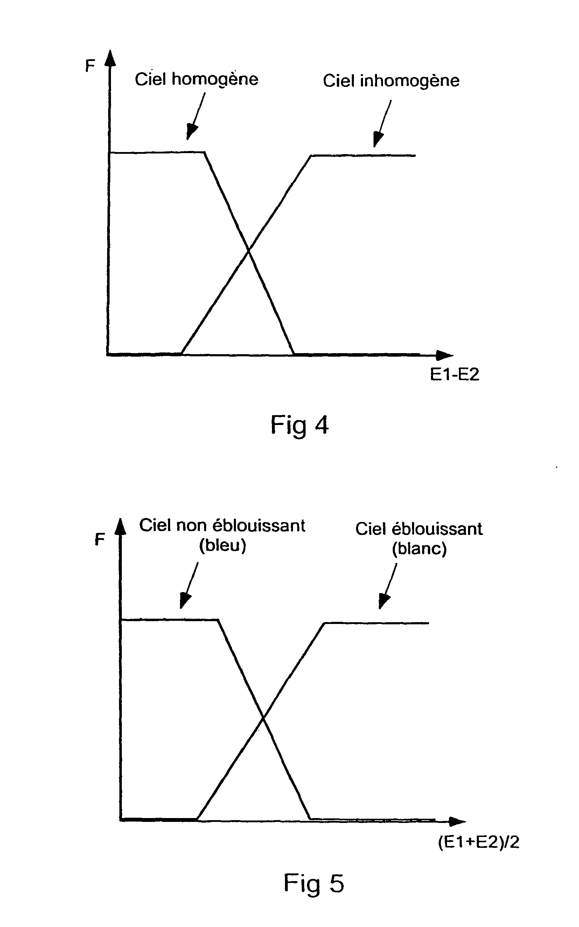

La figure 4 donne, de manière conventionnelle, un exemple des fonctions d'appartenance ciel homogène et ciel non homogène. Comme dans les modes d'exécution précédents, c'est la valeur absolue de l'écart d'éclairement entre deux capteurs ou une pluralité de capteurs élémentaires (caméra CCD) qui permet de déterminer le degré d'appartenance à l'un ou l'autre des sous-ensembles flous, ciel homogène et ciel non homogène. Dans un cas simple un ciel non homogène peut être assimilé au soleil direct.

La figure 5 représente de la même manière un exemple des fonctions d'appartenance ciel bleu et ciel blanc. Le degré d'appartenance à l'un ou l'autre des sous-ensembles flous dépend soit de la valeur de niveau moyen d'éclairement soit de sa composition spectrale, par exemple R/B, selon le capteur utilisé.

Dans les applications à la commande de moyens de protection solaire, le fait de détecter deux états différents n'implique pas nécessairement deux traitements différents. Ainsi, dans le cas d'une installation simple, sans éclairage automatique et avec une protection solaire automatisée sans position intermédiaire (protection 0 ou 100%), la protection solaire sera désactivée dans l'état 1 (ciel bleu) et activée pour les états 2 et 3 (soleil direct ou ciel blanc).

Dans le cas d'une installation de protection solaire plus élaborée comprenant, par exemple, un écran perforé réduisant la transparence de la baie et un écran opaque apte à arrêter le soleil direct, la protection solaire sera désactivée pour l'état 1, l'écran opaque sera activé pour l'état 2 et l'écran perforé sera activé pour l'état 3.

Si l'installation le permet, l'écran opaque ne sera descendu que jusqu'à un niveau suffisant pour ne pas gêner les occupants du bâtiment, par exemple au gré de l'utilisateur ou en fonction de la latitude, de l'heure et du calendrier. Dans ce cas, l'état 2 est décomposé en une pluralité ou une continuité de sous-états.

Une décomposition de l'état 2 est en particulier utile pour commander l'orientation des lames d'un store à lames.

De la même façon, il est possible s'il y a lieu, comme décrit dans l'art antérieur, de commander plus ou moins les luminaires lorsqu'on est dans l'état 1, en le décomposant en une pluralité ou une continuité de sous-états.

Une décomposition de l'état 3 (ciel blanc), peut être également utilisée pour modifier la transparence d'un vitrage électro-chromique en fonction de la plus ou moins forte luminance du ciel.

## Revendications

1. Procédé de mesure de la lumière extérieure pour la commande d'au moins un moyen de protection solaire motorisé et/ou d'éclairage, **caractérisé en ce qu'**on détecte et discrimine au moins trois états, respectivement ciel bleu, ciel blanc et soleil direct.

2. Procédé selon la revendication 1, **caractérisé en ce que** la discrimination entre les trois états étant obtenue à partir d'une détection intermédiaire distinguant soit un état homogène (CH), soit un état inhomogène (CNH) du ciel.

3. Procédé selon la revendication 2, **caractérisé en ce qu'**on compare l'écart entre les mesures (E1, E2) de deux capteurs, ou d'une pluralité de capteurs d'ensoleillement ne pouvant recevoir simultanément la lumière solaire directe, à une première valeur de seuil (S1), l'état du ciel étant homogène (CH) si la valeur absolue de cet écart reste inférieure au seuil (S1) et inhomogène (CNH) dans le cas contraire.

4. Procédé selon la revendication 2, **caractérisé en ce que**, dans un état de ciel homogène (CH), on compare la mesure (E1, E2) d'un capteur d'ensoleillement au moins, ou la moyenne de plusieurs capteurs d'ensoleillement, à une deuxième valeur de seuil (S2), l'état du ciel étant blanc si la mesure est supérieure au seuil (S2) et bleu dans le cas contraire.

5. Procédé selon la revendication 2, **caractérisé en ce que**, dans un état de ciel inhomogène (CNH, état de soleil direct correspondant à un état inhomogène du ciel), on compare la mesure (E1), (E2) d'un capteur d'ensoleillement au moins, ou la moyenne de plusieurs capteurs d'ensoleillement à une troisième valeur de seuil (S3), l'état du ciel étant soleil direct gênant si la mesure est supérieure au seuil (S3), et soleil direct non gênant dans le cas contraire.

6. Procédé selon l'une quelconque des revendications 1 à 5, **caractérisé en ce qu'**au moins un état est décomposé en plusieurs sous-états.

7. Procédé selon l'une des revendications 3 à 6, **caractérisé en ce que** la pluralité des capteurs est remplacée par une caméra monochrome à capteurs matriciels, pourvue d'un objectif grand angle, et dont on exploite le signal vidéo, sur au moins une période de balayage, pour définir l'état homogène ou inhomogène du ciel en comparant les écarts mesurés à un premier seuil (S1), puis dans le cas d'un ciel homogène pour définir un état de ciel bleu si la mesure moyenne est inférieure à un deuxième seuil (S2) et de ciel blanc dans le cas contraire, et enfin définir un état de soleil direct gênant par comparaison des mesures à un troisième seuil (S3).

8. Procédé selon l'une des revendications 3 à 6, **caractérisé en ce que** la pluralité de capteurs est remplacée par une caméra couleur à capteurs matriciels (R, V, B) pourvue d'un objectif grand angle, et dont on exploite le signal vidéo d'une couleur (V), sur au moins une période de balayage, pour définir l'état homogène ou inhomogène du ciel en comparant les écarts mesurés à un premier seuil (S1), puis, dans le cas d'un ciel homogène, en utilisant le rapport d'au moins deux couleurs (R/B) ou leur écart pour définir la couleur du ciel.

9. Procédé selon la revendication 1, **caractérisé en ce qu'**on utilise un processeur utilisant des algorithmes de logique floue et que chacun des états détectés et discriminés est dans ce cas un état **caractérisé par** sa fonction d'appartenance à un sous-ensemble flou.

10. Procédé selon la revendication 9, **caractérisé en ce qu'**on définit deux sous-ensembles flous intermédiaires, respectivement ciel homogène (CH) et ciel inhomogène (CNH), et les fonctions d'appartenance correspondantes.

11. Procédé selon la revendication 10, **caractérisé en ce que** la grandeur variable des fonctions d'appartenance ciel homogène (CH) et ciel inhomogène (CNH) est l'écart absolu entre les mesures (E1, E2) de deux capteurs, ou l'écart maximum d'une pluralité de capteurs d'ensoleillement ne pouvant recevoir simultanément la lumière solaire directe.

12. Procédé selon la revendication 10, **caractérisé en ce que** la grandeur variable des fonctions d'appartenance ciel bleu et ciel blanc est la mesure (E1, E2), d'un capteur d'ensoleillement au moins, ou la moyenne de plusieurs capteurs d'ensoleillement.

13. Procédé selon la revendication 11 ou 12, **caractérisé en ce que** les capteurs utilisés sont constitués par la matrice d'éléments photosensibles d'une caméra (CCD) monochrome ou couleur, munie d'un objectif grand angle.

14. Dispositif de protection solaire et/ou d'éclairage comprenant au moins un élément piloté par le procédé selon l'une des revendications précédentes.

## Claims

1. A process for measuring exterior light for the control of at least one motorised means of solar protection and/or lighting, **characterised in that** at least three states, respectively blue sky, white sky and direct sun, are detected and discriminated.

2. The process as claimed in claim 1, **characterised in that** the discrimination between the three states is obtained on the basis of an intermediate detection distinguishing either a homogeneous state (CH) or an inhomogeneous state (CNH) of the sky.

3. The process as claimed in claim 2, **characterised in that** the difference between the measurements (E1, E2) of two sensors, or of a plurality of sensors of sunshine that may not simultaneously receive direct sunlight, is compared with a first threshold value (S1), the state of the sky being homogeneous (CH) if the absolute value of this difference remains less than the threshold (S1) and inhomogeneous (CNH) in the converse case.

4. The process as claimed in claim 2, **characterised in that**, in a homogeneous sky state (CH), the measurement (E1, E2) of one sunshine sensor at least, or the average of several sunshine sensors, is compared with a second threshold value (S2), the state of the sky being white if the measurement is greater than the threshold (S2) and blue in the converse case.

5. The process as claimed in claim 2, **characterised in that**, in an inhomogeneous sky state (CNH, state of direct sun corresponding to an inhomogeneous state of the sky), the measurement (E1, E2) of one sunshine sensor at least, or the average of several sunshine sensors is compared with a third threshold value (S3), the state of the sky being annoying direct sun if the measurement is greater than the threshold (S3), and non-annoying direct sun in the converse case.

6. The process as claimed in any one of claims 1 to 5, **characterised in that** at least one state is decomposed into several substates.

7. The process as claimed in one of claims 3 to 6, **characterised in that** the plurality of sensors is replaced by a monochrome camera with matrix sensors that is provided with a wide-angle objective, and whose video signal is utilized, over at least one scanning period, to define the homogeneous or inhomogeneous state of the sky by comparing the measured differences with a first threshold (S1), then in the case of a homogeneous sky to define a blue sky state if the average measurement is less than a second threshold (S2) and white sky state in the converse case, and finally, to define a state of annoying direct sun by comparing the measurements with a third threshold (S3).

8. The process as claimed in one of claims 3 to 6, **characterised in that** the plurality of sensors is replaced by a color camera with matrix sensors (R, V, B) that is provided with a wide-angle objective, and whose video signal of one color (V) is utilized, over at least one scanning period, to define the homogeneous or inhomogeneous state of the sky by comparing the measured differences with a first threshold (S1), then, in the case of a homogeneous sky, by using the ratio of at least two colors (R/B) or their difference to define the color of the sky.

9. The process as claimed in claim 1, **characterised in that** a processor using fuzzy logic algorithms is used and **in that** each of the detected and discriminated states is in this case a state **characterized by** its membership function in a fuzzy subset.

10. The process as claimed in claim 9, **characterised in that** two intermediate fuzzy subsets, respectively homogeneous sky (CH) and inhomogeneous sky (CNH), and the corresponding membership functions are defined.

11. The process as claimed in claim 10, **characterised in that** the variable magnitude of the homogeneous sky (CH) and inhomogeneous sky (CNH) membership functions is the absolute difference between the measurements (E1, E2) of two sensors or the maximum difference of a plurality of sunshine sensors that may not simultaneously receive direct sunlight.

12. The process as claimed in claim 10, **characterised in that** the variable magnitude of the blue sky and white sky membership functions is the measurement (E1, E2), of one sunshine sensor at least, or the average of several sunshine sensors.

13. The process as claimed in claim 11 or 12, **characterised in that** the sensors used are constituted by the matrix of photosensitive elements of a monochrome or color camera (CCD), furnished with a wide-angle objective.

14. Solar protection and/or lighting device comprising at least one element operated by the process according to one of the previous claims.

## Patentansprüche

1. Aussenlicht-Messverfahren zum Steuern wenigstens einer motorisierten Sonnenschutz- und/oder Beleuchtungsanlage, **dadurch gekennzeichnet, dass** wenigstens drei Zustände, und zwar blauer Himmel, weisser Himmel bzw. direkte Sonne, erfasst und unterschieden werden.

2. Verfahren nach Anspruch 1, **dadurch gekennzeichnet, dass** die Unterscheidung zwischen den drei Zuständen ausgehend von einer Zwischenmessung erfolgt, welche entweder einen gleichförmigern Zustand (CH) oder einen ungleichförmigen Zustand (CNH) des Himmels unterscheidet.

3. Verfahren nach Anspruch 2, **dadurch gekennzeichnet, dass** der Unterschied zwischen den Messungen (E1, E2) zweier Sensoren oder mehrerer Sonnenlichtsensoren, die das direkte Sonnenlicht nicht gleichzeitig empfangen können, mit einem ersten Schwellwert (S1) verglichen wird, wobei der Zustand des Himmels gleichförmig (CH) ist, wenn der Absolutwert dieses Unterschieds unter dem Schwellwert (S1) bleibt, und anderenfalls ungleichförmig (CNH) ist.

4. Verfahren nach Anspruch 2, **dadurch gekennzeichnet, dass** bei einem gleichförmigen Zustand (CH) des Himmels die Messung (E1, E2) wenigstens eines Sonnenlichtsensors oder das Mittel mehrerer Sonnenlichtsensoren mit einem zweiten Schwellwert (S2) verglichen wird, wobei der Zustand des Himmels weiss ist, wenn die Messung grösser ist als der Schwellwert (S2), und anderenfalls blau ist.

5. Verfahren nach Anspruch 2, **dadurch gekennzeichnet, dass** bei ungleichförmigem Zustand des Himmels (CNH, der Zustand direkter Sonnen entspricht einem ungleichförmigen Zustand des Himmels) die Messung (E1, E2) wenigstens eines Sonnenlichtsensors oder das Mittel mehrerer Sonnenlichtsensoren mit einem dritten Schwellwert (S3) verglichen wird, wobei der Zustand des Himmels störende direkte Sonne ist, wenn die Messung grösser als der Schwellwert (S3) ist, und anderenfalls nicht störende direkte Sonne ist.

6. Verfahren nach einem der Ansprüche 1 bis 5, **dadurch gekennzeichnet, dass** wenigstens ein Zustand in mehrere Unterzustände unterteilt wird.

7. Verfahren nach einem der Ansprüche 3 bis 6, **dadurch gekennzeichnet, dass** eine Vielzahl von Sensoren durch eine mit einem Weitwinkelobjektiv versehene monochrome Kamera mit Sensormatrix ersetzt wird und dass das Videosignal dieser Kamera während wenigstens einer Abtastperiode ausgewertet wird, um den gleichförmigen oder ungleichförmigen Zustand des Himmels zu definieren, indem die gemessenen Unterschiede mit einem ersten Schwellwert (S1) verglichen werden, dann im Falle eines gleichförmigen Himmels, um einen blauen Himmel zu definieren, wenn die mittlere Messung kleiner als ein zweiter Schwellwert (S2) ist, und anderenfalls einen weissen Himmel zu definieren, und schliesslich einen Zustand der störenden direkten Sonne zu definieren, indem Messungen mit einem dritten Schwellwert (S3) verglichen werden.

8. Verfahren ach einem der Ansprüche 3 bis 6, **dadurch gekennzeichnet, dass** die Vielzahl der Sensoren durch eine mit einem Weitwinkelobjektiv versehene Farbkamera mit Sensormatrix (R, V, B) ersetzt wird und dass das Videosignal einer Farbe (V) während wenigstens einer Abtastperiode ausgewertet wird, um den gleichförmigen oder ungleichförmigen Zustand des Himmels zu definieren, indem die gemessenen Unterschiede mit einem ersten Schwellwert (S1) verglichen werden, dann im Falle eines gleichförmigen Himmels, indem das Verhältnis wenigstens zweier Farben (R/B) oder ihres Unterschieds verwendet wird, um die Farbe des Himmels zu definieren.

9. Verfahren nach Anspruch 1, **dadurch gekennzeichnet, dass** ein Prozessor verwendet wird, der Algorithmen der unscharfen Logik (Fuzzy-Logik) verwendet, und dass jeder der erfassten und unterschiedenen Zustände in diesem Falle ein Zustand ist, der durch seine Zugehörigkeitsfunktion zu einem unscharfen Untersystem charakterisiert ist.

10. Verfahren nach Anspruch 9, **dadurch gekennzeichnet, dass** zwei unscharfe Zwischen-Untersysteme definiert werden, und zwar ein gleichförmiger Himmel (CH) und ein ungleichförmiger Himmel (CNH) bzw. die entsprechenden Zugehörigkeitsfunktionen.

11. Verfahren nach Anspruch 10, **dadurch gekennzeichnet, dass** die variable Grösse der Zugehörigkeitsfunktionen gleichförmiger Himmel (CH) und ungleichförmiger Himmel (CNH) der absolute Unterschied zwischen den Messungen (E1, E2) zweier Sensoren oder der maximale Unterschied einer Vielzahl von Sonnenlichtsensoren ist, die das direkte Sonnenlicht nicht gleichzeitig empfangen können.

12. Verfahren nach Anspruch 10, **dadurch gekennzeichnet, dass** die variable Grösse der Zugehörigkeitsfunktionen blauer Himmel und weisser Himmel die Messung (E1, E2) wenigstens eines Sonnenlichtsensors oder das Mittel mehrerer Sonnenlichtsensoren ist.

13. Verfahren nach Anspruch 11 oder 12, **dadurch gekennzeichnet, dass** die verwendeten Sensoren aus der Matrix photoempfindlicher Elemente einer monochromen oder Farbkamera (CCD) bestehen, die mit einem Weitwinkelobjektiv versehen ist.

14. Schutzvorrichtung gegen Sonnenlicht und/oder Beleuchtung, welche wenigstens ein Element aufweist, das durch das Verfahren gemäss einem der vorherigen Ansprüche gesteuert wird.
